# EUROPÄISCHE PATENTSCHRIFT

(11) **EP 2 389 418 B1**
(45) Veröffentlichungstag und Bekanntmachung des Hinweises auf die Patenterteilung: **20.07.2016**
(21) Anmeldenummer: 10700224.8
(22) Anmeldetag: 06.01.2010
(51) Int. Cl.: C09D 5/10

(54) **VERFAHREN ZUR KORROSIONSSCHUTZBEHANDLUNG**
METHOD FOR ANTI-CORROSION TREATMENT
PROCÉDÉ DE TRAITEMENT ANTICORROSIF

(30) Priorität: 20.01.2009 DE 102009005518
(43) Veröffentlichungstag der Anmeldung: 30.11.2011
(73) Patentinhaber: tesa SE, 22848 Norderstedt (DE)
(72) Erfinder: MÜSSIG, Bernhard, 21218 Seevetal (DE); SEIBERT, Matthias, 22453 Hamburg (DE); STROMANN, Michael, 1054 Budapest (HU)
(86) Internationale Anmeldenummer: PCT/EP2010/050071
(87) Internationale Veröffentlichungsnummer: WO 2010/084032

(56) Entgegenhaltungen:
- WO-A-01/31393
- WO-A-01/32798
- WO-A-2004/112482
- DE-A1-102007 011 553
- DATABASE WPI Week 200644 Thomson Scientific, London, GB; AN 2006-427134 XP002572313 & JP 2006 152235 A (NITTO DENKO CORP) 15. Juni 2006 (2006-06-15)

## Beschreibung

Die vorliegende Erfindung betrifft ein Verfahren zur Korrosionsschutzbehandlung von Metalloberflächen mit den Merkmalen des Oberbegriffs von Anspruch 1.

Metallbauteile werden in vielfältigen Bereichen eingesetzt. Dabei werden sie den unterschiedlichsten Witterungsbedingungen ausgesetzt, so dass oftmals eine Korrosionsschutzbehandlung erforderlich ist. Hierzu sind insbesondere für einen vollflächigen Auftrag einer Korrosionsschutzschicht auf Metallbauteile verschiedene Verfahren bekannt. Die DE 10 2006 006 910 B3 offenbart beispielsweise ein Verfahren, bei dem auf die zu schützenden Metalloberflächen eine Korrosionsschutzschicht in Form einer Zinklamellenbeschichtung aufgebracht wird. Die Aufbringung der Zinklamellenbeschichtung erfolgt mittels eines Tauch- oder Sprühverfährens. Bei einem weiteren aus dem Stand der Technik bekannten Verfahren erfolgt eine Korrosionsschutzbehandlung durch Eintauchen der Metalloberflächen in einen kathodisch abscheidbaren Elektrotauchlack (DE 10 2005 059 314 A1). Den beiden zuvor genannten Verfahren ist gemeinsam, dass die Korrosionsschutzschicht auf eine relativ große Fläche, insbesondere vollflächig, auf die zu behandelnde Metalloberfläche aufgebracht wird.

In der Bauindustrie sind als Dichtstreifen im Dachbereich und zum Korrosionsschutz (insbesondere zum Überkleben durchrosteter Bleche oder Rinnen aus Zink) Klebebänder aus Butylkautschuk und Bitumen bekannt. Die weisen allerdings einen sehr hohen kalten Fluss auf, was eine gute Abdichtung auf rauen Untergründen wie Beton ergibt, aber auf einer Autokarosserie bei senkrechter Verklebung im Laufe der Zeit oder bei kurzzeitiger Erhitzung wie in einem Reparaturlackierungsofen abscheren würde.

Insbesondere in der Automobilindustrie besteht jedoch die Notwendigkeit, auch kleine Flächen, nämlich die Oberfläche von Kanten und Übergängen von Metallbauteilen, vor Korrosion durch eine Korrosionsschutzschicht zu schützen. Hierzu wird in der Regel eine Feinnahtabdichtung manuell oder mittels eines Roboters aufgebracht. Als Material für die Feinnaht wird üblicherweise pumpbares PVC-Plastisol verwendet. Dieses wird lokal auf die Metalloberfläche aufgesprüht und anschließend mittels eines Pinsels glatt gestrichen. Bei diesem Verfahren, das grundsätzlich für Kanten und Übergänge geeignet ist, ist es schwierig, die Feinnaht in der im Fahrzeugbau erforderlichen optischen Güte zu erstellen. Vielmehr bleibt die Oberfläche oftmals rau, und ein ungleichmäßiger Auftrag ist mit bloßem Auge erkennbar. Darüber hinaus ist nicht sichergestellt, dass der Auftrag vollständig ist, um einen vollständigen Schutz gegen Korrosion zu gewährleisten.

Die DE 10 2007 011 553 A1 beschreibt Verfahren zur Beschichtung einer metallischen Oberfläche mit einer wässerigen Zusammensetzung zur Vorbehandlung einer metallischen Oberfläche vor einer weiteren Beschichtung oder zur Behandlung einer metallischen Oberfläche, wobei die metallische Oberfläche mit der wässerigen Zusammensetzung in Kontakt gebracht und ein im Wesentlichen organischer Film auf der metallischen Oberfläche ausgebildet wird, der anschließend getrocknet wird und gegebenenfalls zusätzlich ausgehärtet wird.
Ein Aufschmelzen der Zusammensetzung ist nicht offenbart.

Die JP 2006 152 235 A, die WO 2004/112482 A, die WO 01/32798 A und die WO 01/31393 A offenbaren Verfahren zur Beschichtung einer metallischen Oberfläche. Es fehlt der aber stets der Schritt des Aufschmelzens.

Der vorliegenden Erfindung liegt daher das Problem zugrunde, ein Verfahren zur Korrosionsschutzbehandlung von Metalloberflächen anzugeben, das ohne großen Aufwand durchführbar und insbesondere auch zum Schutz von Kanten und Übergängen von Metallbauteilen eingesetzt werden kann.

Das zuvor aufgezeigte Problem wird mit einem Verfahren zur Korrosionsschutzbehandlung von Metalloberflächen mit den Merkmalen des Oberbegriffs von Anspruch 1 durch die Merkmale des kennzeichnenden Teils von Anspruch 1 gelöst.

Vorteilhafte Ausgestaltungen und Weiterbildungen sind Gegenstand der jeweiligen Unteransprüche.

Erfindungsgemäß wurde erkannt, dass ein Klebeband mit einer schmelz- und vernetzbaren speziellen polyolefinischen Schicht bei entsprechendem Verfahren eine gute Korrosionsschutzschicht auf Metalloberflächen ausbilden kann und demgemäß zur Korrosionsschutzbehandlung geeignet ist. Bei Versuchen konnte zudem gezeigt werden, dass mittels geeigneter selbstklebender Rezepturen glatte Oberflächen ausgebildet werden können. Derartige glatte Oberflächen weisen für einen Betrachter mit bloßem Auge eine gleichmäßige Oberflächenstruktur auf und sind dabei eben. Die Verwendung eines solchen Klebebandes zur Ausbildung einer Korrosionsschutzschicht auf Metalloberflächen ist wegen der einfachen Handhabung besonders vorteilhaft. Aufgrund der selbstklebenden Wirkung kann die schmelzbare Schicht besonders einfach auf die Oberflächen aufgebracht und dort vor weiteren prozesssohritten vorfixiert werden. Auch ist ein derartiges Design insbesondere zur Anwendung auf kleinen Flächen geeignet.

Bei dem erfindungsgemäßen Verfahren Wird das Klebeband auf die jeweilige Metalloberfläche aufgebracht und anschließend erwärmt. Bei der Schicht handelt es sich um ein derartiges Material, welches durch Erwärmung erweicht, sich bei Erwärmung auf der Metalloberfläche verteilt, in Fugen einfließen kann, vernetzt (aushärtet) und dabei eine geschlossene und in der Regael glatte Korrosionsschutzschicht ausbildet. In einer Ausführungsform kann das Klebeband auch schon Vor dem Autbringen auf die Metalloberfläche so erwärmt sein, dass die Schicht weich und klebrig ist.

Demgemäß betrifft die Erfindung ein Verfahren zur Korrosionsschutzbehandlung von Metalloberflächen, insbesondere an Kanten und Übergängen der Metallbauteile, durch Aufbringung eines Klebebandes mit einer Schicht aus einem Olefinpolymer und aus einem Vernetzer und durch Erwärmung derart, dass die Schicht aufgeschmolzen wird und sich so eine Korrosionsschutzschicht ausbildet. Dabei oder bei einer weiteren späteren thermischen Belastung vernetzt die Korrosionsschutzschicht und weist dadurch nur einen sehr geringen kalten Fluss auf. Die Erfindung betrifft auch die Verwendung eines solchen Klebebandes zur Korrosionsschutzbehandlung von Metalloberflächen. Unter Metalloberfläche wird nicht nur elementares Metall verstanden, sondern die Oberfläche kann durch Aufrauung, Grundierung, Rostschutzbehandlung wie kathodentauchlackierung oder andere übliche Veredlungsverfahren behandelt sein. Eine bevorzugte Form des Verfahrens ist die Abdichtung von Fugen von Automobilkarosserien.

Dem Fachmann galten Olefinpolymere für Korrosionsschutzschichten als ungeeignet. Zum einen sind weiche nicht kristalline Materialien oder solche mit einem Schmelzpunkt von unter 105°C wie VLLDPE zu klebrig, als dass sie in Pulverform für eine Pulverlackierung hergestellt werden könnten, und zum anderen wären sie bei Anwendungen mit thermischer Belastung wie zum Beispiel auf einer Autokarosserie unter Sonnenbestrahlung zu stark klebrig und würden durch kalten Fluss abscheren, wodurch der unlackierte Untergrund streifenförmig zu sehen wäre. Durch den Einsatz eines ausgesuchten chemischen Vernetzers konnte ohne Verlust der Lagerfähigkeit bei üblicher Raumtemperatur das Problem der Klebrigkeit und des kalten Flusses überwunden werden. Darüber hinaus erhöht die Vernetzung die Beständigkeit gegen Medien wie Frostschutzmittel, Kraftstoff oder Kaltreiniger. Hochschmelzende Polyolefine wie HPDPE oder PP hingegen sind hochkristallin und hart, so dass zwar Pulver hergestellt werden kann, aber eine Korrosionsschutzschicht aus einem solchem Material bei Biegebeanspruchung sehr spröde ist und abplatzen kann. Konventionelle Polyolefine weisen auf Metallen auch keine gute Haftung auf, durch eine haftklebrige Formulierung des Polyolefins oder Ausrüstung mit einer Haftklebeschicht konnte die vorliegende Erfindung dieses Problem überwinden. Darüber hinaus ist im Gegensatz zu einer Pulverlackierung oder einer PVC-Plastisolbeschichtung die Dicke und die Oberflächenglätte der Korrosionsschutzschicht einstellbar.

In einer Ausführungsform kann die Schicht haftklebrig sein, wodurch die Schicht gleichzeitig die Eigenschaft einer Klebemasse beziehungsweise eines Klebebandes beinhaltet, als auch nach Erwärmung gleichzeitig die Korrosionsschutzschicht ausbildet.

In einer anderen Ausführungsform wird die Schicht zur Fixierung auf der Metalloberfläche mit einer Haftklebemasse vorzugsweise auf Basis von Polyacrylaten ausgerüstet. Dies ist insbesondere von Vorteil wenn die Schicht bei Applikationstemperatur nicht hinreichend haftet.

Für den Fachmann war es überraschend, dass die Verwendung eines Klebebandes mit einer Schicht aus erfindungsgemäßem Olefinpolymer eine viskoelastischen Korrosionsschutzschicht ausbildet, welche der Auftragung einer Plastisolpaste von der Einfachheit des Verfahrens und der technischen Eigenschaften überlegen ist.

Das Klebeband ist für Transport, Lagerung oder Stanzung vorzugsweise mindestens einseitig mit einem Liner versehen, also zum Beispiel einer silikonbeschichteten Folie oder einem Silikonpapier.

Das Olefinpolymer ist ein Copolymer oder Terpolymer aus Ethylen. Eine Ausführungsform basiert auf Ethylen und einem Vinylester, vorzugsweise Vinylacetat. Eine weitere Ausführungsform beruht auf einem Copolymer oder Terpolymer aus Ethylen und Acryl- oder Methacrylsäureester, vorzugsweise Methyl-, Ethyl- oder Butylacrylat.

Geeignet sind auch Terpolymere aus Ethylen, Vinylacetat und Kohlenmonoxid oder Ethylen, Butylacrylat und Kohlenmonoxid. Butylkautschuk (IIR) oder Ethylen-Propylen-Ethylidennorbornen (EPDM) sind ebenfalls geeignet. Bevorzugt werden jedoch Copolymere und Terpolymere, welche ein Monomer mit Carbonylgruppen (zum Beispiel Kohlenmonoxid, Ester- oder Carboxylgruppen), besonders bevorzugt mit einem Anteil von mehr als 10 Gew.-%, insbesondere mehr 30 Gew.-% enthalten. Solche bevorzugten Polymere sind aufgrund ihrer Polarität eine günstige Basis für eine gute Haftung auf Metall und zu einem nachträglich aufzubringenden PVC-Plastisol oder Lack. Gute Haftung weisen auch Terpolymere von Ethylen, Butylacrylat und Glycidylmethacrylat wie auch aus Ethylen, Butylacrylat und Acrylsäure auf. In einer anderen Ausführungsform können Carbonylgruppen nicht durch die übliche Copolymerisation, sondern durch Pfropfung mit Acrylsäure oder Maleinsäureanhydrid eingebracht werden.

Die Dichte des Polyolefins wird nach ISO 1183 ermittelt und in g/cm³ ausgedrückt.

Der Schmelzindex wird nach ISO 1133 mit 2,16 kg geprüft und in g/10 min ausgedrückt. Die Prüftemperatur beträgt wie dem Fachmann geläufig bei Ethylen basierten Polymeren 190°C. Der Kristallitschmelzpunkt (T_{cr}) und die Schmelzwärme werden mit DSC (Mettler DSC 822) bei einer Aufheizrate von 10 °C/min nach ISO 3146 ermittelt, beim Auftreten mehrerer Schmelzpeaks wird der mit der höchsten Temperatur gewählt, da dieser die Mindesttemperatur der Erwärmung zur Verfilmung und des Auffließens bestimmt. Das erfindungsgemäße Olefinpolymer weist vorzugsweise einen Schmelzindex von mehr als 4 g/10 min, besonders bevorzugt mehr als 10 g/10 min und insbesondere mehr als 25 g/10 min auf. Mit steigendem Schmelzindex steigt die Geschwindigkeit der Ausbildung der Korrosionsschutzschicht und sinkt die Applikationstemperatur. Liegt der Schmelzindex jedoch viel zu hoch, also zum Beispiel 100 g/10 min, verringert sich jedoch die Vernetzungsgeschwindigkeit deutlich.

Das Olefinpolymer soll daher entweder keinen Kristallitschmelzpunkt aufweisen oder dieser soll unter 105°C, vorzugsweise unter 75°C liegen. Mit sinkendem Schmelzpunkt weist die Korrosionsschutzschicht ein verbessertes Verhalten auf (dynamischmechanisches Verhalten bei Schlag- oder Wechselklimabelastung, Flexibilität). Der Kristallitschmelzpunkt bestimmt die Mindesttemperatur der Erwärmung zur Verfilmung und des Auffließens der erfindungsgemäßen Schicht.

Wesentlicher Bestandteil der Schicht ist ein Vernetzer für die Vernetzung des Olefinpolymers. Dieser Vernetzer kann der Schicht bei seiner Herstellung, zum Beispiel durch Folienextrusion, zugesetzt werden. Um eine gute Verteilung zu erreichen, ohne lange mischen zu müssen, was zu einer vorzeitigen Reaktion führen kann, wird ein Masterbatch des Vernetzer in einer Matrix aus dem erfindungsgemäßen Olefinpolymer oder einem anderen Polymer oder Harz oder Weichmacher welches mit Olefinpolymer gut mischbar ist eingesetzt. In einer speziellen Ausführungsform, in der der Vernetzer thermisch sehr empfindlich ist, kann er mit oder ohne ein Bindemittel auf einer Seite der Schicht aufgebracht werden, von wo er im Laufe der Zeit durch Diffusion in die Schicht einwandert.

Der Vernetzer ist ein Additiv. Selbiges ist in der Lage, das Olefinpolymer in der Wärme zu vernetzen, um dadurch den kalten Fluss des unvernetzten Olefinpolymers in der Endanwendung zu reduzieren oder zu vermeiden. Beispiele sind radikalerzeugende Verbindungen wie C-C-Spalter und Peroxide. Bevorzugt werden Peroxide, Beispiele hierfür sind Alkylhydroperoxide, Dialkylperoxide, Peroxycarboxylsäuren, Diacylperoxides, Peroxycarboxylester, α-Oxyperoxide und α-Aminoperoxide. Die Zerfallsgeschwindigkeit des Peroxids darf weder zu hoch sein (schlechte Lagerfähigkeit bei Raumtemperatur), noch zu niedrig (geringe Vernetzungsgeschwindigkeit oder zu hohe Temperatur beim erfindungsgemäßen Verfahren). Daher soll die Temperatur, bei der die Halbwertszeit (t_{1/2}) 0,1 Stunde beträgt, vorzugsweise in dem Bereich von 120 °C bis 170 °C liegen. Für eine gleichmäßige Vernetzung ist auch eine gute Verteilung beziehungsweise gute Löslichkeit des Peroxids in der Schicht wichtig. Daher sind zum Beispiel 1,1-Di(tert-butylperoxy)-3,3,5-trimethylcyclohexan oder tert-Butylperoxy-2-ethylhexylcarbonat günstiger als Dicumylperoxid, welches in der Schicht zur Auskristallisation neigt und damit inhomogen verteilt ist.

Weist das Olefinpolymer reaktive Gruppen auf, so sind auch andere Vernetzer möglich. Enthält das Polymer zum Beispiel Epoxygruppen (Glycidylmethacrylat als Comonomer), sind Di- oder Polyamine, Di- oder Polycarbonsäuren oder Lewissäuren wie wasserfreies Zinkchlorid geeignete Vernetzer. Enthält das Polymer zum Beispiel Carboxylgruppen, so kann man mit Di- oder Polyaminen, Di- oder Polyepoxiden oder (gegebenenfalls. verkappten) Di- oder Polyisocyanaten vernetzen.

Es stellte sich heraus, dass das Olefinpolymer erhebliche Mengen an Klebharz aufnehmen kann. Durch das Klebharz können nicht nur Klebeigenschaften der Schicht zur Metalloberfläche, sondern auch zu nachfolgenden Plastisol- oder Lackschichten beeinflusst werden. Ferner können durch Harze das Schmelzverhalten der Schicht sowie die Glastemperatur und dynamisch-mechanische Eigenschaften der Korrosionsschutzschicht eingestellt werden.

Die Menge an Klebharz beträgt vorzugsweise 10 bis 100 phr (phr bedeutet Gewichtsteile bezogen auf 100 Gewichtsteile Resin beziehungsweise Rubber, das heißt hier Olefinpolymer). Die Polydispersität des Klebharzes ist das Verhältnis von Gewichtsmittel zu Zahlenmittel der Molmassenverteilung und kann durch Gelpermeationschromatographie ermittelt werden. Neben der Harzmenge spielt Polydispersität für die Eigenschaften eine wichtige Rolle. Als Klebharz werden daher solche mit einer Polydispersität von weniger als 2,1, vorzugsweise weniger als 1,8, besonders bevorzugt weniger als 1,6 eingesetzt. Eine weitere Einflussgröße ist der Schmelzpunkt des Klebharzes (Bestimmung nach DIN ISO 4625).

Als Klebharz hat sich herausgestellt, dass Harze auf Basis von Kolophonium (zum Beispiel Balsamharz) oder Kolophoniumderivaten (zum Beispiel disproportioniertes, dimerisiertes oder verestertes Kolophonium), vorzugsweise partiell oder besonders bevorzugt vollständig hydriert, gut geeignet sind. Terpenphenolharze zeichnen sich wie die hydrierten Harze durch eine besonders hohe Alterungsbeständigkeit aus. Eingesetzt werden ebenfalls Kohlenwasserstoffharze, die vermutlich aufgrund Ihrer Polarität gut verträglich sind. Dies sind zum Beispiel aromatische Harze wie Cumaron-Inden-Harze oder Harze auf Basis Styrol oder α-Methylstyrol oder cycloaliphatische Kohlenwasserstoffharze aus der Polymerisation von C₅-Monomeren wie Piperylen aus oder C₅- oder C₉-Fraktionen von Crackern oder Terpenen wie ß-Pinen oder δ-Limonen oder Kombinationen hiervon, vorzugsweise partiell oder vollständig hydriert, und Kohlenwasserstoffharze gewonnen durch Hydrierung von aromatenhaltigen Kohlenwasserstoffharzen oder Cyclopentadien-Polymeren.

Die Schicht kann zur Einstellung der gewünschten Eigenschaften einen flüssigen Weichmacher wie beispielsweise aliphatische (paraffinische oder verzweigte) und cycloaliphatische (naphthenische) Mineralöle, Ester der Adipin-, Phthal-, Trimellit- und Zitronensäure, Wachse wie Wollwachs, flüssige Kautschuke (zum Beispiel niedermolekulare Nitril Butadien- oder Polyisoprenkautschuke), flüssige Polymerisate aus isobutenhomopolymer und/oder Isobuten-Buten-Copolymer, Flüssig- und Weichharze mit einem Schmelzpunkt unter 40°C auf Basis der Rohstoffe von Klebharzen, insbesondere der oben aufgeführten Klassen an Klebharz, enthaften. Besonders bevorzugt werden flüssige Polymerisate aus Isobuten und/oder Buten, Mineralöle und Ester wie sie für PVC-Plastisolbeschichtungen eingesetzt.

Zur Optimierung der Eigenschaften der Schicht kann diese weitere Additive wie Füllstoffen, Pigmenten, Antioxidantien oder oben nicht genannte Vernetzungsmittel enthalten. Geeignete Füllstoffe und Pigmente sind beilspielsweise Zinkoxid. Titandioxid, Calciumcarbonat, Zinkcarbonat, Silicate und Kieselsäure.

Die Herstellung der erfirndungsgemäßen Schicht kann aus lösung sowie aus der Schmelze erfolgen. Bevorzugte Herstell- und Verarbeitungsverfahren erfolgen aus des Schmelze. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebmasseschicht.

Zur Optimierung der Haftung zwischen der erfindungsgemäßen Schicht und gegebenenfalls nachfolgender Plastisol- oder Lackschicht kann diese modifiziert sein. Beispiele hierfür sind physikalische Behandlungen mit Coronaentladung oder Plasma, Beschichtung mit haftvermittelnden Substanzen wie hydriertem Nitrilkaulschuk, Vinylidenchloridpolymer oder solchen Haftvermittlern, wie sie dem Fachmann für die Grundierung von Kunststoffteilen aus Polyolefinen (zum Beispiel Automobilstoßfanger) für nachfolgende Lackierungen bekannt sind. Weiterhin kann die Oberfläche zu diesem Zweck auch mit einer Folie wie zum Beispiel PVC, Polyester (PEN, PET) oder Polystyrol modifiziert sein.

Weiterhin ist in manchen Fällen eine Barriereschicht sinnvoll, um Migration von Weichmacher aus der Plastisolschicht in die Korrosionsschutzschicht oder Migration von Weichmacher aus der Korrosionsschutzschicht in eine Lackschicht zu vermeiden. Dies kann zum Beispiel eine Beschichtung mit Vinylidenchloridpolymer oder Aufbringung einer Polyesterfolie sein.

Die erfindungsgemäße Schicht sollte eine Schichtdicke von mindestens 50 µm, vorzugsweise von mindestens 100 µm, besonders bevorzugt von mindestens 200 µm aufweisen. Zudem sollte die Schichtdicke maximal 750 µm, vorzugsweise maximal 600 µm, besonders bevorzugt maximal 400 µm betragen. Durch die Wahl der Schichtdicke wird sichergestellt, dass sowohl die Metalloberfläche beim Aufschmelzen der erfindungsgemäßen Schicht ausreichend bedeckt wird aber andererseits die Schicht nicht ungleichmäßig verläuft (zum Beispiel zu stark fließt) und die Dicke der Korrosionsschutzschicht nicht zu groß wird.

Zur Anwendung hat es sich als besonders geeignet herausgestellt, dass das Klebeband zunächst auf einer Rolle aufgewickelt wird. Später kann es von dieser Rolle entnommen oder als Stanzling auf die Metalloberfläche aufgebracht werden.

Bei dem Verfahren wird die Schicht vorzugsweise bei mindestens 90 °C, besonders bevorzugt bei mindestens 110°C und insbesondere bei mindestens 130°C aufgeschmolzen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Im Folgenden wird die Erfindung durch einige Beispiele näher erläutert ohne die Erfindung damit einschränken zu wollen.

Rohstoffe der Beispiele:

| | |
|---|---|
| Levamelt VPKA8896 | Copolymer aus Ethylen mit 68 Gew.-% Vinylacetat, Schmelzindex 25 g/10min, Dichte 1,08 g/cm³, Kristallitschmelzpunkt nicht vorhanden |
| Elvax PV1400: | Copolymer aus Ethylen mit 32 Gew.-% Vinylacetat, Schmelzindex 43 g/10min, Dichte 0,96 g/cm³, Kristallitschmelzpunkt 59 °C |

| | |
|---|---|
| Lucalen A2910M | Copolymer aus Ethylen mit 7 Gew.-% Butylacrylat und 4 Gew.-% Acrylsäure, Schmelzindex 7 g/10min, Dichte 0,927 g/cm³, Kristallitschmelzpunkt 96 °C |
| Elvaloy HP 662 | Copolymer aus Ethylen mit Butylacrylat und Kohlenmonoxid, Schmelzindex 25 g/10min, Dichte 0,96 g/cm³, Kristallitschmelzpunkt 62 °C |
| LD 251: | LDPE, Schmelzindex 8 g/10min, Dichte 0,9155 g/cm³, Biegemodul 180 MPa, Kristallitschmelzpunkt 104 °C |
| Engage 7467: | Copolymer aus Ethylen und Buten-(1), Schmelzindex 1,2 g/10 min Dichte 0,862 g/cm³, Biegemodul 4 MPa, Kristallitschmelzpunkt 34 °C |
| Palatinol N | Diisononylphthalat |
| Foral 85: | voll hydrierter Glycerinester des Kolophoniums mit einem Schmelzpunkt von 85 °C und einer Polydispersität von 1,2 |
| Trigonox 117 | tert-Butylperoxy-2-ethylhexylcarbonat |
| Trigonox 29 | 1,1-Di(tert-butylperoxy)-3,3,5-trimethylcyclohexan |
| T174 | Masterbatch 10 Gew.-% Trigonox 117 und 90 Gew.-% Elvax PV1400 |
| Irganox 1726: | phenolisches Antioxidans mit schwefelbasierter Funktion eines sekundären Antioxidans |

### Beispiel 1

Das Klebeband besteht aus einem Silikonpapier mit einer 300 µm dicken haftklebrigen Schmelzbeschichtung aus folgenden Komponenten:

| | |
|---|---|
| 100 phr | Levamelt VPKA8896 |
| 20 phr | Foral 85 |
| 10 phr | Palatinol N |
| 1,5 phr | Trigonox 117 |

Das Klebeband wird in einer Breite von 20 mm über die Fuge von zwei sich 10 mm überlappenden KTL behandelten Stahlblechen von 0,5 mm Dicke geklebt und das Silikonpapier abgezogen.

Anschließend wird dieser Aufbau für 40 Minuten auf 170 °C erwärmt. Die Erwärmung führt zum Aufschmelzen der Polyolefinschicht auf die Metalloberfläche, so dass sich eine gleichmäßig verflossene Korrosionsschutzschicht ausbildet. Nach Abkühlen der Metallbleche zeigt die Korrosionsschutzschicht eine glatte Oberfläche. Dabei bleibt die Blechkante zwischen den beiden Metallblechen noch erkennbar, aber die Fuge ist komplett abgedichtet.

Anschließend werden die Metallbleche unterschiedlichen Umgebungsbedingungen ausgesetzt. Die Temperatur wird hierzu abwechselnd zwischen ca. -5 °C und 70 °C variiert. Die Korrosionsschutzschicht platzt aufgrund seiner dynamisch-mechanischen Eigenschaften trotz der wechselnden thermischen Ausdehnung nicht ab.

Weitere Bleche mit dieser Korrosionsschicht werden mit einem Radius von 200 mm gebogen. Die Korrosionsschutzschicht platzt dabei nicht ab.

Parallel wurden solche Bleche mit einem Unterbodenschutz-Plastisol auf Basis PVC und DINP versehen und 15 min bei 165 °C ausgehärtet. Die Plastisolschicht haftet auf dem Blech und auf der Korrosionsschutzschicht einwandfrei.

### Beispiel 2

Das Klebeband ist wie folgt aufgebaut:
- silikonisierte Polyesterfolie mit einer Dicke von 25 µm
- 40 µm Lösungsmittelacrylhaftklebemasse
- 250 µm Schmelzbeschichtung aus folgenden Komponenten:

| | | |
|---|---|---|
| 100 | phr | Elvax PV1400 |
| 10 | phr | T174 |
| 0,2 | phr | Irganox 1726, |

Das Klebeband wird nach Entfernung des Liners in einer Breite von 20 mm über die Fuge von zwei sich 10 mm überlappenden KTL behandelten Stahlblechen von 0,5 mm Dicke geklebt und das Silikonpapier abgezogen.

Anschließend wird dieser Aufbau für 20 Minuten auf 185 °C erwärmt. Die Erwärmung führt zum Ausschmelzen der Polyolefinschicht auf die Metalloberfläche, so dass sich eine gleichmaßig verflossene Korrosionsschutzschicht ausbildet. Nach Abkühlen der Metallbleche zeigt die Korrosionsschutzschicht eine glätte Oberfläche. Dabei bleibt die Blechkante zwischen den beiden Metallbiechen noch erkennbar, aber die Fuge ist komplett abgedichtet.

Anschließend werden die Metallbleche unterschiedlichen Umgebungsbedingungen ausgesetzt. Die Temperatur wurde hierzu abwechselnd zwischen ca. -5°C und 70 °C variiert. Die Korrosionsschutzschicht platzt aufgrund seiner dynamisch-mechanischen Eigenschaften trotz der wechseinden thermischen Ausdehnung nicht ab.

Weitere Bleche mit dieser Korrosionsschicht werden mit einem Radius von 200 mm gebogen. Die Korrosionsschutzschicht platzt dabei nicht ab.

Parallel werden solche Bleche mit einem 1-K-PU-Automobillack beschichtet und 10 min bei 140 °C getrocknet und ausgehärtet. Der Lack haftet auf dem Blech und auf der Korrosionsschutzschicht einwandfrei.

### Beispiel 3

Das Klebeband ist wie folgt aufgebaut:
- silikonisierte Polyesterfolie mit einer Dicke von 25 µm
- 40 µm Lösungsmittelacrylhaftklebemasse
- 250 µm Schmelzbeschichtung aus folgenden Komponenten:

| | | |
|---|---|---|
| 100 | phr | Lucalen A2910M |
| 20 | phr | Foral 85 |
| 10 | phr | Palatinol N |
| 1,5 | phr | Trigonox 29 |
| 0,2 | phr | Irganox 1726, |

- 25 µm beidseitig geätzte PET-Folie **25-µm**

Die Prüfungen werden wie in Beispiel 2 durchgeführt und die Ergebnisse sind ebenfalls einwandfrei.

### Beispiel 4

Das Klebeband ist wie folgt aufgebaut:
- silikonisierte Polyesterfolie mit einer Dicke von 25 µm
- 40 µm Lösungsmittelacrylhaftklebemasse
- 250 µm Schmelzbeschichtung aus folgenden Komponenten:

| | | |
|---|---|---|
| 100 | phr | Elvaloy HP 662 |
| 1 | phr | Trigonox 29 |

Die Prüfungen werden wie in Beispiel 2 durchgeführt und die Ergebnisse sind ebenfalls einwandfrei.

### Vergleichsbeispiel 1

Die Ausführung erfolgt wie in Beispiel 1 beschrieben, jedoch mit LD 251 statt Levamelt VPKA8896. Die Ausbildung der Korrosionsschutzschicht ist einwandfrei. Beim Wechselklimatest kommt es an den Enden der Korrosionsschutzschicht zu Ablösungserscheinungen. Beim Biegeversuch platzt die Korrosionsschutzschicht vollständig ab. Die Plastisolschicht haftet auf dem Blech einwandfrei aber nicht auf der Korrosionssch utzsch icht.

### Vergleichsbeispiel 2

Die Ausführung erfolgt wie in Beispiel 1 beschrieben, jedoch mit Engage 7467 statt Levamelt VPKA8896. Die Ausbildung der Korrosionsschutzschicht ist unvollständig und ungleichmäßig dick. An der oberen Kante der Fuge ist die Korrosionsschutzschicht teilweise abgelaufen. Beim Biegeversuch platzt die Korrosionsschutzschicht vollständig ab. Die Plastisolschicht haftet auf dem Blech einwandfrei aber nicht auf der Korrosionsschutzschicht.

### Vergleichsbeispiel 3

Die Ausführung erfolgt wie in Beispiel 2 beschrieben, jedoch ohne Vernetzer T174. Die Ausbildung der Korrosionsschutzschicht ist unvollständig und ungleichmäßig dick. An der oberen Kante der Fuge ist die Korrosionsschutzschicht teilweise abgelaufen. Beim Biegeversuch hält die Korrosionsschutzschicht. Beim Aushärten der Lackierung bilden sich Risse in der Lackschicht da die Korrosionsschutzschicht zu fließen beginnt.

## Patentansprüche

1. Verfahren zur Korrosionsschutzbehandlung von Metalloberflächen, insbesondere an Kanten und Übergängen der Metallbauteile,
**dadurch gekennzeichnet,**
**dass** auf die Metalloberfläche ein Klebeband mit einer Schicht aus einem Olefinpolymer und einem Vernetzer aufgebracht wird und dass das Klebeband derart erwärmt wird, dass die Schicht aufgeschmolzen wird und sich so eine Korrosionsschutzschicht ausbildet, wobei
das Olefinpolymer ein Copolymer oder Terpolymer aus Ethylen und einem Vinylester ist oder
das Olefinpolymer ein Copolymer oder Terpolymer aus Ethylen und Acryl- oder Methacrylsäureester ist.

2. Verfahren nach Anspruch 1,
**dadurch gekennzeichnet, dass**
das Olefinpolymer ein Copolymer oder Terpolymer aus Ethylen und einem Vinylacetat ist.

3. Verfahren nach Anspruch 1.
**dadurch gekennzeichnet, dass**
das Olefinpolymer ein Copolymer oder Terpolymer aus Ethylen und Methyl-, Ethyl- oder Butylacrylat ist.

4. Verfahren nach zumindest einem der vorhergehenden Ansprüche,
**dadurch gekennzeichnet, dass**
das Olefinpolymer keinen Kristallitschmelzpunkt oder einem Kristallitschmelzpunkt von unter 105 °C aufweist.

5. Verfahren nach zumindest einem der vorhergehenden Ansprüche,
**dadurch gekennzeichnet, dass**
der Vernetzer ein Peroxid ist.

6. Verfahren nach zumindest einem der vorhergehenden Ansprüche, **dadurch gekennzeichnet, dass** Dicke der Schicht zwischen 50 und 750 vorzugsweise zwischen 100 und 600 besonders bevorzugt zwischen 200 und 400 µm beträgt.

7. Verfahren nach zumindest einem der vorhergehenden Ansprüche, **dadurch gekennzeichnet, dass** die Oberfläche der Korrosionsschutzschicht dahingehend modifiziert ist, dass eine ausreichende Haftung zu einer nachträglich aufgebrachten Plastisol- oder Lackschicht sichergestellt ist.

8. Verfahren nach zumindest einem der vorhergehenden Ansprüche, **dadurch gekennzeichnet, dass** die Schicht bei mindestens 90°C, vorzugsweise bei mindestens 110°C, weiter vorzugsweise bei mindestens 130°C aufgeschmolzen wird.

9. Verfahren nach zumindest einem der vorhergehenden Ansprüche, **dadurch gekennzeichnet, dass** die Schicht haftklebrig ist.

10. Verfahren nach zumindest einem der vorhergehenden Ansprüche, **dadurch gekennzeichnet, dass** sich zwischen der Schicht und der Metalloberfläche eine Haftklebemasse befindet.

## Claims

1. Method for the corrosion control treatment of metal surfaces, especially at edges and transitions of the metal components,
**characterized**
**in that** an adhesive tape having a layer of an olefin polymer and a crosslinker is applied to the metal surface, and in that the adhesive tape is heated such that the layer is melted and thus a corrosion control layer is formed, wherein the olefin polymer is a copolymer or terpolymer of ethylene and a vinyl ester or the olefin polymer is a copolymer or terpolymer of ethylene and acrylic or methacrylic ester.

2. Method according to Claim 1,
**characterized in that**
the olefin polymer is a copolymer or terpolymer of ethylene and a vinyl acetate.

3. Method according to Claim 1,
**characterized in that**
the olefin polymer is a copolymer or terpolymer of ethylene and methyl, ethyl or butyl acrylate.

4. Method according to at least one of the preceding claims,
**characterized in that**
the olefin polymer has no crystallite melting point or a crystallite melting point of below 105°C.

5. Method according to at least one of the preceding claims,
**characterized in that**
the crosslinker is a peroxide.

6. Method according to at least one of the preceding claims, **characterized in that** the thickness of the layer is between 50 and 750, preferably between 100 and 600, more preferably between 200 and 400 µm.

7. Method according to at least one of the preceding claims, **characterized in that** the surface of the corrosion control layer has been modified to ensure sufficient adhesion to a subsequently applied plastisol layer or paint layer.

8. Method according to at least one of the preceding claims, **characterized in that** the layer is melted at not less than 90°C, preferably at not less than 110°C, more preferably at not less than 130°C.

9. Method according to at least one of the preceding claims, **characterized in that** the layer is pressure-sensitively adhesive.

10. Method according to at least one of the preceding claims, **characterized in that** a pressure-sensitive adhesive is located between the layer and the metal surface.

## Revendications

1. Procédé de traitement anticorrosion de surfaces métalliques, notamment de bords et de jonctions de composants métalliques, **caractérisé en ce qu'**une bande adhésive comprenant une couche en un polymère oléfinique et un agent de réticulation est appliquée sur la surface métallique et **en ce que** la bande adhésive est chauffée de sorte que la couche fonde et forme ainsi une couche anticorrosion,
le polymère oléfinique étant un copolymère ou terpolymère d'éthylène et d'un ester de vinyle, ou
le polymère oléfinique étant un copolymère ou un terpolymère d'éthylène et d'un ester de l'acide acrylique ou méthacrylique.

2. Procédé selon la revendication 1, **caractérisé en ce que** le polymère oléfinique est un copolymère ou terpolymère d'éthylène et d'acétate de vinyle.

3. Procédé selon la revendication 1, **caractérisé en ce que** le polymère oléfinique est un copolymère ou terpolymère d'éthylène et d'acrylate de méthyle, d'éthyle ou de butyle.

4. Procédé selon au moins l'une quelconque des revendications précédentes, **caractérisé en ce que** le polymère oléfinique ne présente pas de point de fusion des cristallites ou présente un point de fusion des cristallites inférieur à 105 °C.

5. Procédé selon au moins l'une quelconque des revendications précédentes, **caractérisé en ce que** l'agent de réticulation est un peroxyde.

6. Procédé selon au moins l'une quelconque des revendications précédentes, **caractérisé en ce que** l'épaisseur de la couche est comprise entre 50 et 750, de préférence entre 100 et 600, de manière particulièrement préférée entre 200 et 400 µm.

7. Procédé selon au moins l'une quelconque des revendications précédentes, **caractérisé en ce que** la surface de la couche anticorrosion est modifiée pour assurer une adhésion suffisante à une couche de plastisol ou de vernis appliquée ultérieurement.

8. Procédé selon au moins l'une quelconque des revendications précédentes, **caractérisé en ce que** la couche est fondue à au moins 90 °C, de préférence à au moins 110 °C, de manière davantage préférée à au moins 130 °C.

9. Procédé selon au moins l'une quelconque des revendications précédentes, **caractérisé en ce que** la couche est adhésive de contact.

10. Procédé selon au moins l'une quelconque des revendications précédentes, **caractérisé en ce qu'**une composition adhésive de contact se trouve entre la couche et la surface métallique.
